Europäisches Patentamt

**European Patent Office**

Office européen des brevets

(11) Publication number: **0 094 745**
**A2**

(12) # EUROPEAN PATENT APPLICATION

(21) Application number: **83302212.2**

(22) Date of filing: **19.04.83**

(51) Int. Cl.³: **B 01 D 37/00**

(30) Priority: **14.05.82 GB 8214034**

(43) Date of publication of application:
**23.11.83 Bulletin 83/47**

(84) Designated Contracting States:
**BE DE FR GB NL**

(71) Applicant: **IMPERIAL CHEMICAL INDUSTRIES PLC**
**Imperial Chemical House Millbank**
**London SW1P 3JF(GB)**

(72) Inventor: **Sutton, David**
**6 Larkspur Close Beechwood**
**Runcorn Cheshire(GB)**

(74) Representative: **Thomas, Ieuan et al,**
**Imperial Chemical Industries PLC Legal Department,**
**Patents Thames House North Millbank**
**London SW1P 4QG(GB)**

(54) **Filtration.**

(57) A method for filtering suspended particles from a solution or suspension thereof in an aqueous medium characterised in that the suspension or dispersion comprises, in addition to the suspended particles, a substantially water-insoluble non-ionic surfactant and an electrolyte.

Croydon Printing Company Ltd

./...

Fig.1.

1. 'SYNPERONIC' A3
2. 'SYNPERONIC' A4
3. 'SYNPERONIC' A5
4. 'SYNPERONIC' A7

# FILTRATION

This invention relates to the filtration of aqueous dispersions or suspensions.

Where one step in an industrial process comprises the purification and/or separation of a particulate product from an aqueous dispersion or suspension thereof by filtration, an improvement in the rate of filtration often signficantly increases the throughput of the process.

It is known that addition of an electrolyte to an aqueous dispersion or suspension of a solid effects agglomeration of the solid and hence that the rate of filtration of the dispersion or suspension may be increased.

We have now found that where an aqueous dispersion or suspension comprises, in addition to the dispersed or suspended solid which it is desired to filter therefrom, a substantially water-insoluble non-ionic surfactant and an electrolyte the rate of filtration thereof may be further increased.

Accordingly, the present invention provides a method for filtering dispersed or suspended particles from a dispersion or suspension thereof in an aqueous medium characterised in that the dispersion or suspension comprises, in addition to the dispersed or suspended particles, a substantially water-insoluble non-ionic surfactant and an electrolyte.

As a measure of the rate of filtration the apparent specific resistance to filtration (ASR) of a filter cake may be used. It will be appreciated that as the apparent specific resistance to filtration decreases the rate of filtration increases. Apparent specific resistance to filtration is defined by the equation

$$ASR = \frac{2A^2PB}{C\mu} \text{ (metres/kilogram)}$$

where P = pressure drop across the filter cake ($Newtons/metres^2$),

A = Area of the horizontal cross-section of the filter cake ($metres^2$),

$\mu$ = viscosity of filtrate (kilogram metres/second),

C = dry solids per unit volume of dispersion ($kilogram/metres^3$), and

B = gradient of line $\theta/v$ against v (seconds x $metres^{-6}$),

where $\theta$ = time of filtration (seconds), and
v = volume of filtrate ($metres^3$).

The substantially water-insoluble non-ionic surfactant which is used in the method of the present invention comprises a hydrophobic portion and a hydrophilic portion. The hydrophilic portion preferably comprises a polyalkylene oxide or a polyol, which may be a homo- or copolymer, and more preferably comprises a polyethylene oxide or a polyethylene oxide/polypropylene oxide copolymer having up to about 25 mole per cent of propylene oxide.

The hydrophobic portion of the non-ionic surfactant used in the process of the present invention is typically a fluorinated hydrocarbyl group or a polysiloxane of a type which is conventionally used in non-ionic surfactants or preferably a hydrocarbyl group. For example, it may comprise an aromatic ring, e.g. phenyl, preferably substituted with an alkyl group having up to 10 carbon atoms, more preferably about 7 to 10 carbon atoms; or a long-chain alkyl group, which may be linear or branched, preferably having 10 to 30 carbon atoms and more preferably having 13 to 15 carbon atoms. Where the dispersed or suspended particles comprise a coal or a mineral ore it is preferred that the hydrophobic portion is an alkylated phenyl group in which the alkyl group has about 8 or 9 carbon atoms.

It will be appreciated that the ratio of the molecular weight of the hydrophobic portion to the molecular weight of the hydrophilic portion may be varied, depending on the chemical constitution of the two portions, to provide a desired substantially water-insoluble non-ionic surfactant. For example, where the hydrophobic portion comprises an aliphatic chain of, for example, about 12 to 15 carbon atoms, or an aromatic ring bearing an aliphatic substituent of, for example, about 8 to 10 carbon atoms, and the hydrophilic portion comprises a polyethylene oxide chain, the polyethylene oxide chain preferably contains, on average, about 1 to 8 ethylene oxide residues.

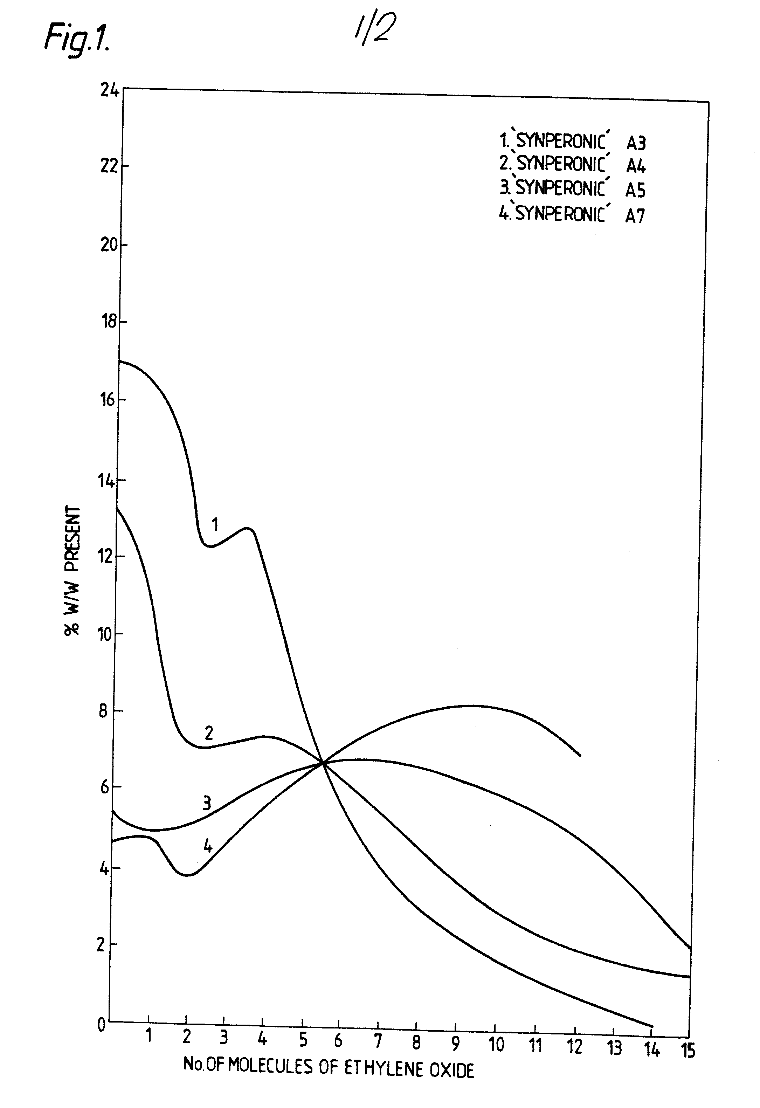

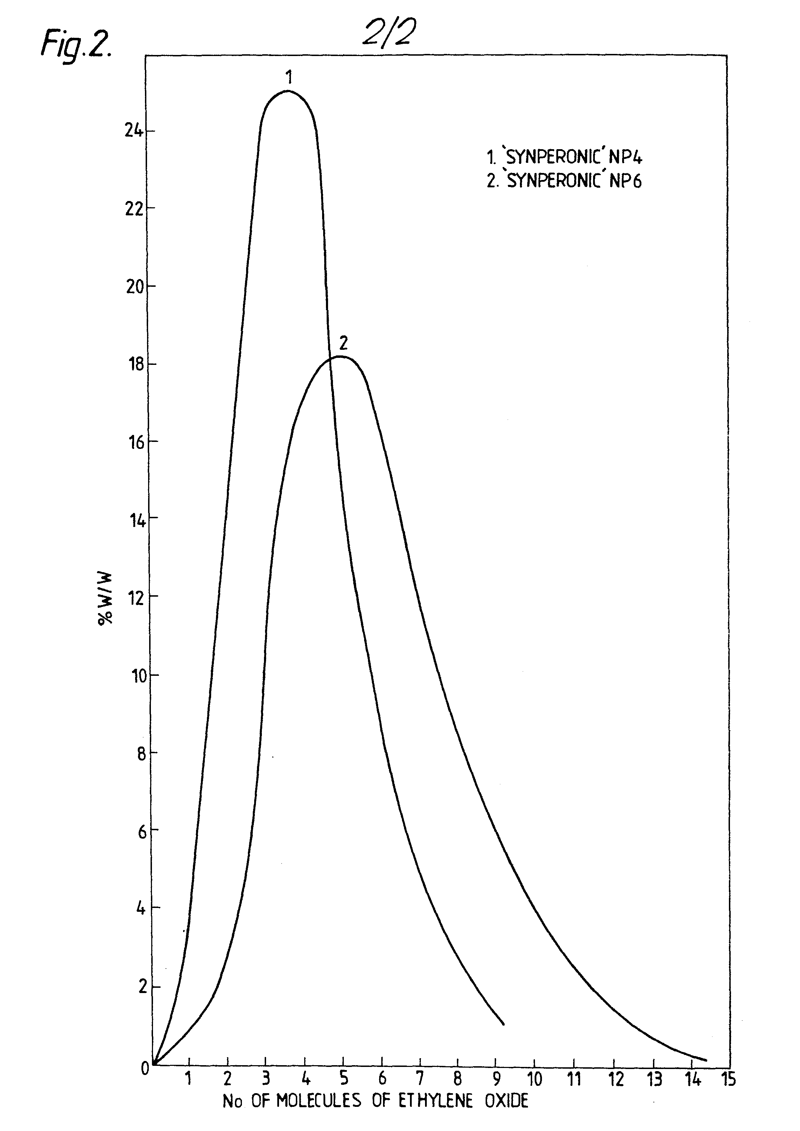

It will be appreciated that where the hydrophilic portion of a substantially water-insoluble non-ionic surfactant used in the process of the present invention is derived from a polyalkylene oxide polymer such a polymer is often not mono-dispersed but exhibits a molecular weight distribution. For example, where the hydrophobic portion comprises an aliphatic chain and the hydrophilic portion comprises a polyethylene oxide the polyethylene oxide typically has a molecular weight distribution as shown in Figure 1; where the hydrophobic portion comprises an alkylated aromatic group and the hydrophilic portion comprises a polyethylene oxide the polyethylene oxide typically has a molecular weight distribution as shown in Figure 2. It is often preferred that the polyethylene oxide is not mono-dispersed.

In the accompanying drawings:
Figure 1 illustrates the molecular weight distribution for a range of ethylene oxide chainlengths in alkyl alcohol ethoxylate which are useful as substantially water-insoluble surfactants for use in the present invention (Synperonic is a Registered Trade Mark); and Figure 2 illustrates the molecular weight distribution for two ethylene oxide chainlengths in nonylphenyl ethoxylates which are useful as substantially water-insoluble surfactants for use in the present invention.

The concentration of the substantially water-insoluble non-ionic surfactant used in the process of the present invention is often in the range $0.5 \times 10^{-6}$ to $12 \times 10^{-6}$ moles/metres$^2$ of dispersed or suspended particles and preferably is about $2 \times 10^{-6}$ to $5 \times 10^{-6}$ moles/metres$^2$ of dispersed or suspended particles. Where the dispersed or suspended particles have an average size of 4 microns and the concentration thereof is about 1% (by volume) the aforesaid concentrations of substantially water-insoluble non-ionic surfactant are equivalent to 2, 50, 9 and 22 ppm.

The electrolyte which may be used in the process of the present invention may be any compound which ionises in water and does not adversely affect the other components of the dispersion. Preferably the electrolyte is a salt, particularly preferably a salt of a metal of Group IA or IIA of the Periodic Table of Elements, e.g. sodium or calcium, and more particularly preferably a salt of an inorganic acid.

All references to the Periodic Table of Elements in this specification are to the version of the Periodic Table of Elements shown in "Advanced Inorganic Chemistry" by F A Cotton and G Wilkinson, Third Edition, Interscience Publishers, 1976.

The concentration of salts in the dispersion is in the range 0.005 to 1.0 molar. For example, where a salt of a Group IA metal is used in the process of the present invention, e.g. sodium chloride, the concentration of the salt in the dispersion is typically in the range 0.05 to 0.5 molar. Where a salt of a Group IIA metal is used in the process of the present invention, e.g. barium or calcium chloride, the concentration of the salt in the dispersion is typically in the range 0.01 to 0.1 molar.

Whilst it is often preferred that an electrolyte is added as a discrete component to the dispersion or suspension to be filtered in the present invention we do not exclude the possibility that, where the dispersed or suspended particles comprise coal or a mineral ore, e.g. a gold ore, the electrolyte is not added as a discrete compound but is present by dissolution thereof from the particles. For example, we have found that certain coals and gold slurries contain sufficent electrolytes to be used in the present invention without the necessity to add additional amounts of electrolyte.

The dispersion or suspension which is to be filtered in the process of the present invention may be formed in a variety of ways. For example, the electrolyte and the substantially water-insoluble non-ionic surfactant may be added to a performed dispersion or suspension of a solid in an aqueous medium or the dispersion or suspension may be formed in situ in an aqueous medium which comprises the electrolyte and the substantially water-insoluble non-ionic surfactant. Neat substantially water-insoluble non-ionic surfactant may be used or it may be used as a solution thereof in a suitable solvent, e.g. iso-propanol.

Solids which may be filtered in the process of the present invention may be organic or inorganic. As examples of organic solids we would mention inter alia polymers which are prepared in emulsion processes, e.g. polyvinyl chloride, and polystyrene; and dyestuffs, e.g. halogenated copper phthalocyanate. As examples of inorganic solids we would mention inter alia calcium carbonate, china clays, coal and mineral ores, e.g. copper, gold, lead, iron, either alone or in combination.

The solid particles which are filtered from an aqueous dispersion in the method of the present invention are typically in the range 0.1 to a few hundred microns. For example polystyrene latices and coal suspensions which are filtered in the process of the present invention often have mean particle sizes of 0.2 to 4.5 microns and 50-150 microns respectively.

The present invention will be further described by reference to the following Examples which are illustrative of the invention.

Examples 1 to 4

To a 5% v/v aqueous dispersion of a polystyrene latex having a particle size of 1.3 micron, prepared by the method of Goodwin et al, Colloid and Polymer Science, 1974, 252, page 464, was added a substantially water-insoluble non-ionic surfactant to give a surfactant concentration of $3 \times 10^{-6}$ moles/metres$^2$ of polystyrene. The suspension was stirred thoroughly. A solution of an electrolyte in water was added to give a specified concentration. The dispersion was filtered and the ASR thereof measured.

By way of comparison the experiment was repeated in the absence of a surfactant.

The results are given in Table 1 from which the improvement in rate of filtration of a polystyrene latex on use of a substantially water-insoluble non-ionic surfactant can be seen.

## TABLE 1

| Example No. | Electrolyte Molar (concentration) | Surfactant | A.S.R (metres/kgm) |
|---|---|---|---|
| 1 | BaCl2 (0.02) | Synperonic A3 | $1.89 \times 10^{11}$ |
| 2 | BaCl2 (0.02) | Synperonic A6 | $9.55 \times 10^{11}$ |
| 3 | NaCl (0.2) | Synperonic A3 | $3.81 \times 10^{11}$ |
| 4 | NaCl (0.2) | Synperonic NP4 | $4.46 \times 10^{11}$ |
| C.T. | BaCl2 (0.02) | - | $2.93 \times 10^{12}$ |
| C.T. | NaCl (0.2) | - | $2.68 \times 10^{12}$ |

C.T: Comparative test

The Synperonic range of surfactants can be obtained from Imperial Chemical Industries PLC.

Example 5

Synperonic A3 (0.37 grams) was added to an aqueous slurry (500 mls; 12.4% solids by weight) of çoal particles (size range 10-100 microns) containing salts dissolved from the particles.

The slurry was filtered and the ASR determined; $3.59 \times 10^9$ metres/kgm.

By way of comparison the experiment was repeated in the absence of the surfactant and the ASR was found to be $4.76 \times 10^9$ metres/kgm.

Example 6

Synperonic A3 (48 mgs) and barium chloride (sufficient to give a 0.05 M concentration in slurry) were added to an aqueous slurry (750 mls; 8% solids by weight) of gold particles (10-75 microns; ex Deelkroal Gold).

The slurry was filtered and the ASR determined; $1.25 \times 10^{10}$ metres/kgm.

By way of comparison the experiment was repeated in the absence of surfactant and the ASR was found to be $1.95 \times 10^{10}$ metres/kgm.

CLAIMS

1. A method for filtering dispersed or suspended particles from a dispersion or suspension thereof in an aqueous medium characterised in that the dispersion or suspension comprises, in addition to the dispersed or suspended particles, a substantially water-insoluble non-ionic surfactant and an electrolyte.

2. A method as claimed in Claim 1 wherein the substantially water-insoluble non-ionic surfactant comprises (a) a hydrophilic portion which comprises a polyalkylene oxide or a polyol and (b) a hydrophobic portion which comprises a hydrocarbyl group, a fluorinated hydrocarbyl group or a polysilioxane.

3. A method as claimed in Claim 2 wherein the polyalkylene oxide comprises a polyethylene oxide or a polyethylene oxide/propylene oxide copolymer having up to about 25 mole percent of propylene oxide.

4. A method as claimed in Claim 3 wherein the polyethylene oxide is not mono-dispersed.

5. A method as claimed in Claim 2 wherein the hydrophobic portion comprises an aromatic, or alkylsubstituted aromatic group or a long-chain alkyl group.

6. A method as claimed in Claim 3, wherein the polyethylene oxide contains, on average, about 1 to 8 ethylene oxide residues and the hydrophobic portion comprises an aliphatic group of about 13 to 15 carbon atoms or an aromatic ring bearing an alkyl substituent of 8 to 10 carbon atoms.

7. A method as claimed in Claim 1 wherein the electrolyte is a salt of a metal of Group IA or IIA of the Periodic Table of Elements.

8.     A method as claimed in Claim 1 wherein the dispersed or suspended particles comprise emulsion-prepared organic polymers, dyestuffs, calcium carbonate, china clay, coal or mineral ores.

9.     A method as claimed in Claim 8 wherein the coal particles have an average size of 50-150 microns.

10.     A method as claimed in Claim 1 wherein the substantially water-insoluble non-ionic surfactant and the electrolyte are added to the dispersion or suspension of particles.

Fig.1.

1/2

0094745

1. 'SYNPERONIC' A3
2. 'SYNPERONIC' A4
3. 'SYNPERONIC' A5
4. 'SYNPERONIC' A7

% W/W PRESENT

No. OF MOLECULES OF ETHYLENE OXIDE

Fig.2.

2/2

0094745

1. 'SYNPERONIC' NP4
2. 'SYNPERONIC' NP6

%W/W

No OF MOLECULES OF ETHYLENE OXIDE